# EUROPEAN PATENT SPECIFICATION

(11) **EP 4 159 135 B1**
(45) Date of publication and mention of the grant of the patent: **24.06.2026**
(21) Application number: 21814230.5
(22) Date of filing: 18.05.2021
(51) Int. Cl.: G01N 23/046, B32B 1/08, B32B 3/12, B32B 5/26, B32B 29/02

(54) **DETECTION PASSAGE, PASSAGE ASSEMBLY AND CT DETECTION DEVICE**
DETEKTIONSDURCHGANG, DURCHGANGSANORDNUNG UND CT-DETEKTIONSVORRICHTUNG
PASSAGE DE DÉTECTION, ENSEMBLE DE PASSAGE ET DISPOSITIF DE DÉTECTION PAR TOMODENSITOMÉTRIE

(30) Priority: 29.05.2020 CN 202010472665
(43) Date of publication of application: 05.04.2023
(73) Proprietor: Tsinghua University, Beijing 100084 (CN); Nuctech Company Limited, TongFang Building Shuangqinglu Haidian District Beijing 100084 (CN)
(72) Inventor: CHEN, Zhiqiang, Beijing 100084 (CN); ZHANG, Li, Beijing 100084 (CN); HONG, Mingzhi, Beijing 100084 (CN); WANG, Zinan, Beijing 100084 (CN); HUANG, Qingping, Beijing 100084 (CN)
(74) Representative: Gunzelmann, Rainer
(86) International application number: PCT/CN2021/094267
(87) International publication number: WO 2021/238716

(56) References cited:
- EP-A1- 3 647 828
- CN-A- 102 889 454
- CN-A- 108 614 303
- CN-A- 110 722 864
- CN-U- 201 693 367
- CN-U- 202 428 187
- CN-U- 203 576 528
- CN-U- 203 736 216
- CN-U- 208 506 272
- US-A1- 2015 265 229

## Description

### TECHNICAL FIELD

The present disclosure relates to a field of radiation detection, and in particular to a detection channel, a channel assembly including the detection channel, and a CT detection device including the detection channel.

### BACKGROUND

Generally, when a CT detection device is in operation, an object to be detected enters the detection device from one end of the detection device, and leaves the detection device from the other end of the detection device. In this detection process, the space where the object to be detected moves is a channel of the CT detection device. A strength, a stiffness, a wear resistance, an assembly difficulty, etc. of the channel are all crucial to the CT detection device.

CN110722864A relates to a preparation method for a cylinder of a nuclear magnetic resonance imager. The structural component of the cylinder includes a main body serving as a shell, wherein the main body is of a cylindrical structure; a reinforcing ring is arranged on the outer circumference of the main body; and a guide rail is arranged on the inner surface of the main body and is used for placing a bed board for a patient to lie down. The cylinder is characterized in that the main body is made of an aramid honeycomb sandwich structure; the lower area of the guide rail is removed, and a solid prepreg layer is adopted in the lower area; the reinforcing ring is laid on the outer side of the main body through unidirectional prepreg; the main body and the reinforcing ring are integrally formed in a co-curing mode; and the guide rail is formed by compression molding of glass fiber prepreg and then bonding epoxy resin with the main body. The cylinder adopts the aramid honeycomb sandwich structure, and the solid prepreg layer is locally designed, so the effects of reducing the weight of the cylinder and improving the production efficiency and safety are achieved, and the cylinder has more excellent heat insulation and sound insulation properties.

EP3647828A1 discloses a shielding structure of a safety inspection equipment and a safety inspection channel are provided. The shielding structure of the safety inspection equipment includes a first carbon fiber layer, a polyurethane layer and a second carbon fiber layer, which are sequentially stacked to be configured as a shielding channel with two opened ends. The second carbon fiber layer is an outer layer of the shielding channel. The first carbon fiber layer and the second carbon fiber layer are made of carbon fiber materials. The polyurethane layer is made of polyurethane materials. In the present disclosure, the polyurethane board layer is added between the two carbon fiber layers, since the carbon fiber layer has good strength, the carbon fiber layers are covered on the both sides of the polyurethane board to ensure the overall strength, so that the rigidity of the shielding structure can be improved. The rigidity of the shielding structure has little influence on the imaging quality, so that the rigidity of the shielding structure can be improved while reducing the influence on the imaging quality. In addition, the polyurethane board layer has small density, so that the polyurethane board layer is lighter than the carbon fiber layer, and thus the total weight can be reduced. And, cost of the polyurethane board layer is low, thus reducing the overall cost.

### SUMMARY

The embodiments of the present disclosure provide an improved detection channel, a channel assembly including the detection channel and a CT detection device including the detection channel. They achieve the greater strength, stiffness, and wear resistance with less weight, and are easy for assembly and maintenance.

According to the present invention, a detection channel for a CT detection device is provided with the features of claim 1.

According to an exemplary embodiment of the present disclosure, a connecting surface is provided on at least one of two ends of the base, and the connecting surface is configured to be connected to a transmission channel so as to form a through channel assembly.

According to an exemplary embodiment of the present disclosure, an outer side of the base is sleeved with at least one annular member for mounting a lead plate.

According to an exemplary embodiment of the present disclosure, the outer side of the base includes a region where the lead plate is not installed so as to allow an incidence of a detection radiation from the region.

According to another aspect of the present disclosure, a channel assembly for a CT detection device is provided, including: the detection channel according to any one of the above-mentioned embodiments; and at least one transmission channel in connection and communication with at least one of two ends of the base of the detection channel.

According to an exemplary embodiment of the present disclosure, the channel assembly further includes a transmission belt channel located at bottoms of the detection channel and the transmission channel and configured for a transmission belt to pass through.

According to yet another aspect of the present disclosure, a CT detection device is provided, including: the detection channel according to any one of the above-mentioned embodiments.

According to an exemplary embodiment of the present disclosure, the CT detection device further includes: a rotating frame provided with a radiation source and a detector; a slip ring bearing, and a support stand, including: a main body portion including a bearing mounting hole, wherein the slip ring bearing is arranged in the bearing mounting hole, and the rotating frame is rotatably disposed on the slip ring bearing; a pedestal located at a bottom portion of the main body portion and configured to support the main body portion; and a connecting portion, wherein a width of a lower portion of a cross section of the connecting portion is greater than a width of an upper portion of the cross section of the connecting portion, an upper portion of the connecting portion is connected to the main body portion, and a lower portion of the connecting portion is connected to the pedestal, wherein the detection channel is arranged in a mounting space of the rotating frame.

Other objectives and advantages of the present disclosure will become apparent from the following descriptions of the present disclosure with reference to the accompanying drawings, which is beneficial to a comprehensive understanding of the present disclosure.

### BRIEF DESCRIPTION OF THE DRAWINGS

FIG. 1 shows a perspective view of a CT detection device according to the embodiments of the present disclosure.
FIG. 2 shows a side view of the CT detection device shown in FIG. 1.
FIG. 3 shows a front view of the CT detection device shown in FIG. 1.
FIG. 4 shows a bottom view of the CT detection device shown in FIG. 1.
FIG. 5 shows a perspective view of a support stand according to the embodiments of the present disclosure.
FIG. 6 shows a front view of the support stand shown in FIG 5.
FIG. 7 shows a bottom view of the support stand shown in FIG. 5.
FIG. 8 shows a cross-sectional view of a support stand according to a first embodiment of the present disclosure taken along direction AA in FIG. 6.
FIG. 9 shows a cross-sectional view of a support stand according to a second embodiment of the present disclosure taken along direction AA in FIG. 6.
FIG. 10 shows a cross-sectional view of a support stand according to a third embodiment of the present disclosure taken along direction AA in FIG. 6.
FIG. 11 shows a perspective view of a detection channel according to the embodiments of the present disclosure.
FIG. 12 shows a front view of the detection channel shown in FIG. 11.
FIG. 13 shows a top view of the detection channel shown in FIG. 11.
FIG. 14 shows a side view of the detection channel shown in FIG. 11.
FIG. 15 shows a cross-sectional view of a material forming the detection channel shown in FIG. 11.

### Reference Numerals

10 support stand
11 main body portion
12 bearing mounting hole
13 pedestal
14 connecting portion
15 first support plate
16 first reinforcing rib
17 second reinforcing rib
18 third reinforcing rib
20 slip ring bearing
30 rotating frame
40 pedestal extension section
50 detection channel
50A carbon fiber layer
50B aramid honeycomb paper layer
50C aramid layer
51 base
52 connecting surface
53 annular member
60 transmission channel
70 channel assembly
72 transmission belt channel
100 CT detection device

### DETAILED DESCRIPTION OF EMBODIMENTS

Technical solutions of the present disclosure will be further specifically described below through the embodiments and in combination with the accompanying drawings. In the specification, the same or similar reference numerals indicate the same or similar components. The following descriptions of the embodiments of the present disclosure with reference to the accompanying drawings are intended to explain the general inventive concept of the present disclosure, and should not be construed as limiting the present disclosure.

Additionally, in the following detailed descriptions, for ease of explanation, various specific details are set forth to provide a comprehensive understanding of the embodiments of the present disclosure. However, it is obvious that one or more embodiments may be implemented without these specific details. In other circumstances, well-known structures and devices are shown in a diagram form to simplify the drawings.

A channel may be spliced together by several segments. For example, a channel is mostly made of stainless steel plates or carbon steel plates, and a region in the middle through which a radiation need to pass is required to be made of carbon fiber or other materials that do not reduce the radiation. The technical solution for constituting such a channel is as follows: a steel plate channel + a carbon fiber channel + a steel plate channel. A shape of a cross section of the channel is generally a closed rectangle or a closed trapezoid, and the carbon fiber portion of the channel is generally formed by splicing two L-shaped carbon fiber plates.

Due to space limitations of mounting and maintenance of the detection device, it is usually necessary to connect various sections of the channel inside the channel, which is inconvenient for manual operation. Moreover, a channel formed by connecting a plurality of short sections may result in an insufficient overall stiffness of the channel, and therefore it is necessary to add support structures at multiple positions below the channel. This increases a complexity of the detection device, which thereby requires more time and costs during the mounting and maintenance.

Regarding at least one of the above aspects, the embodiments of the present disclosure provide an improved solution. The embodiments of the present disclosure will be described in more detail below with reference to the accompanying drawings.

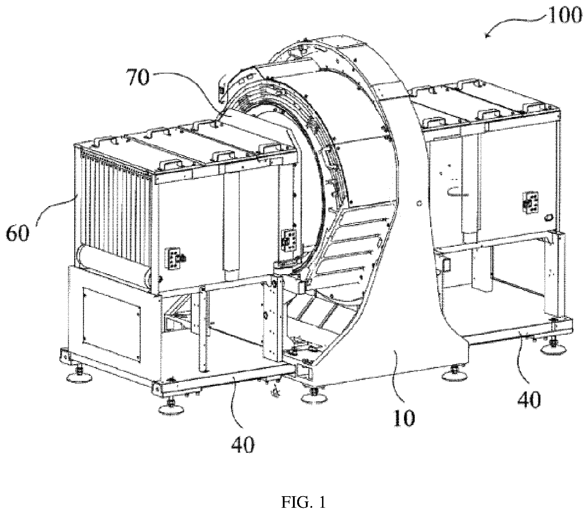

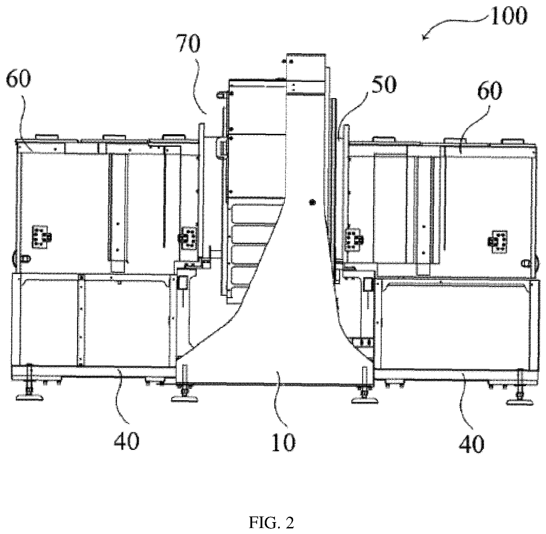

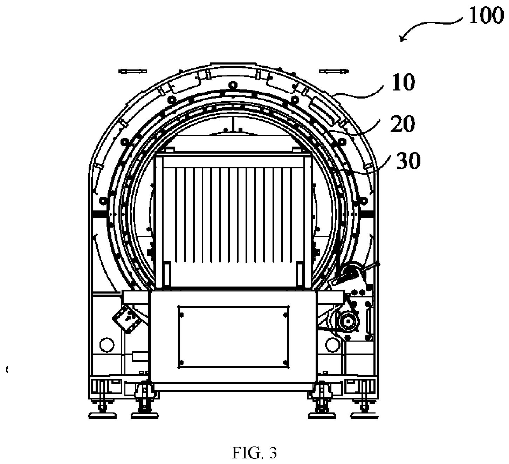

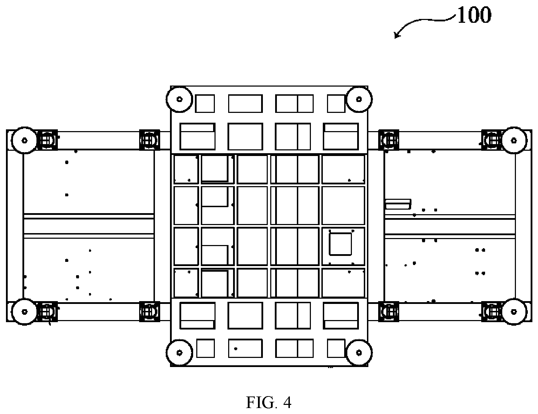

As shown in FIG. 1 to FIG. 4, the embodiments of the present disclosure provide a CT detection device 100, including: a support stand 10, a slip ring bearing 20, a rotating frame 30, and a detection channel 50. The rotating frame 30 is provided with a radiation source and a detector, and the rotating frame is rotatably disposed on the slip ring bearing 20.

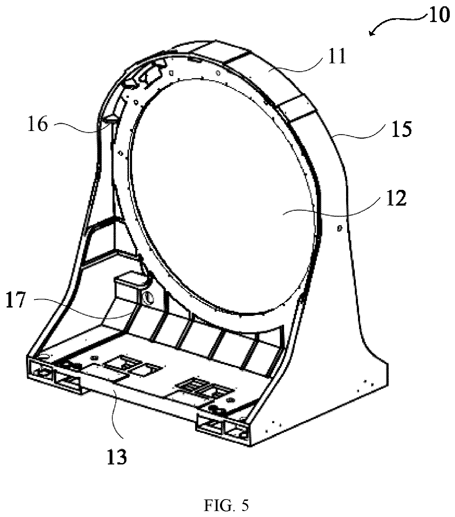

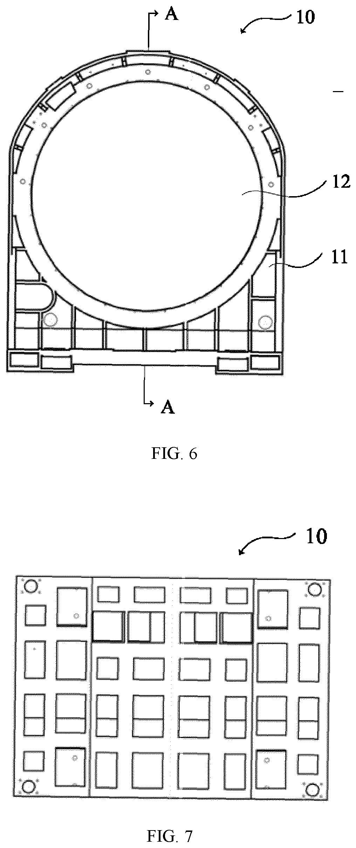

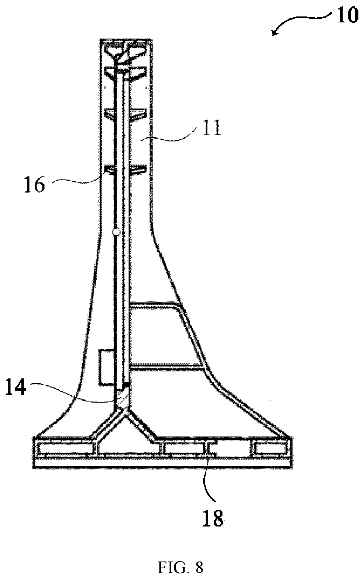

As shown in FIG. 5 to FIG. 10, the support stand 10 includes three components, specifically a main body portion 11, a pedestal 13 and a connecting portion 14. The main body portion 11 includes a bearing mounting hole 12, and the slip ring bearing 20 is arranged in the bearing mounting hole 12. The pedestal 13 is located at a bottom portion of the main body portion 11 and is configured to support the main body portion 11. A cross section of the connecting portion 14 taken along a direction parallel to a page surface in FIG. 8 includes an upper portion and a lower portion, and the lower portion of the cross section is wider than the upper portion of the cross section. An upper portion of the connecting portion 14 is connected to the main body portion 11, and a lower portion of the connecting portion 14 is connected to the pedestal 13. In such configuration, the support stand according to the embodiments of the present disclosure may achieve a sufficient stiffness and strength with a low weight, thereby a vibration of the rotating frame may be reduced.

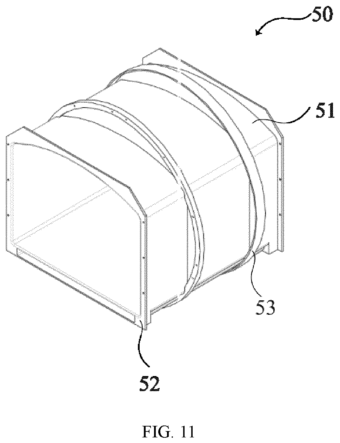

As shown in FIG. 1 to FIG. 2, the detection channel 50 is arranged in a mounting space of the rotating frame 30. The object to be detected is irradiated by the detection radiation in the detection channel 50 and a returned radiation signal is received by the detector, thereby completing the detection process. As shown in FIG. 11 to FIG. 15, the detection channel 50 includes a base 51 having two open ends, and the base is configured to allow the object to be detected to pass through the detection channel 50. In the embodiments, the overall detection channel 50 is integrally formed by a carbon fiber composite material. This is beneficial to simplify the mounting process of the channel due to an omission of processes of splicing multiple sections.

In this way, when a failure occurs in the detection channel, it is allowed to directly replace a new detection channel, thereby reducing costs and time of maintenance.

In the embodiments, a cross section of the detection channel 50 may be substantially rectangular, trapezoidal, square, or the like. The specific shape may be provided as required.

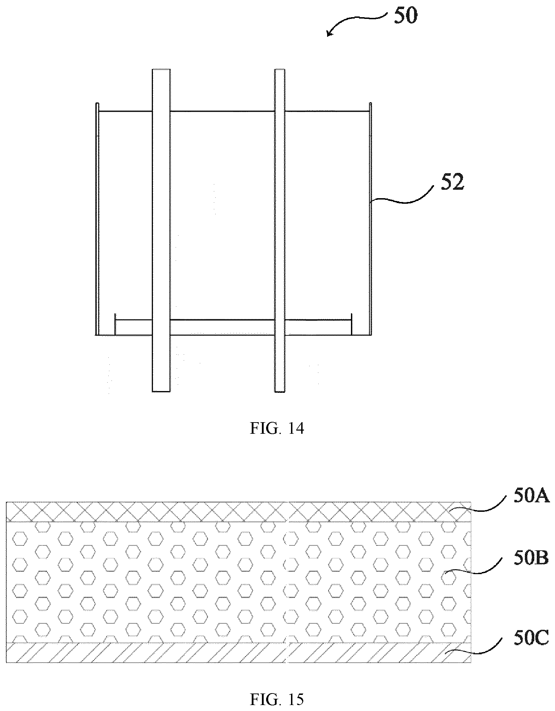

As shown in FIG. 15, the carbon fiber composite material includes a carbon fiber layer 50A, an aramid honeycomb paper layer 50B, and an aramid layer 50C stacked in sequence. The carbon fiber composite material has a good wear resistance and stiffness, and has an advantage of a light weight. In the embodiments, a thickness of the carbon fiber layer 50A is 0.1-0.5 mm, and preferably 0.2-0.4 mm. In the embodiments, a thickness of the aramid honeycomb paper layer 50B is 1-10 mm, preferably 3-8 mm, and more preferably 5 mm. A thickness of the aramid layer 50C is 0.1-0.5 mm, and preferably 0.2-0.4 mm. In the embodiments, the carbon fiber layer 50A is located on an inner side of the detection channel. The inner side of the detection channel is in contact with the object to be detected, and the carbon fiber layer 50A provides a desired wear resistance, thereby facilitating a passing of the object to be detected.

In the embodiments, a thickness of the aramid honeycomb paper layer in the carbon fiber composite material forming a channel bottom plate of the base 51 is larger than a thickness of the aramid honeycomb paper layer in the carbon fiber composite material forming other portions of the base 51. In the embodiments, the thickness of the aramid honeycomb paper layer in the carbon fiber composite material forming the channel bottom plate is larger than the thickness of the aramid honeycomb paper layer in the carbon fiber composite material forming other portions of the base by 1-10 mm, preferably by 3-8 mm, and more preferably by 5 mm. When the object to be detected passes through the detection channel, the bottom plate of the base 51 of the detection channel will not be bent due to a weight of the object to be detected.

As shown in FIG. 11, a connecting surface 52 is provided on at least one of two ends of the base 51 and is configured to be connected to a transmission channel 60, thereby forming a through channel assembly 70. In the embodiments, the connecting surface 52 includes a connecting hole (such as a screw hole) to fix the transmission channel 60 on the detection channel 50 through a connector (such as a screw).

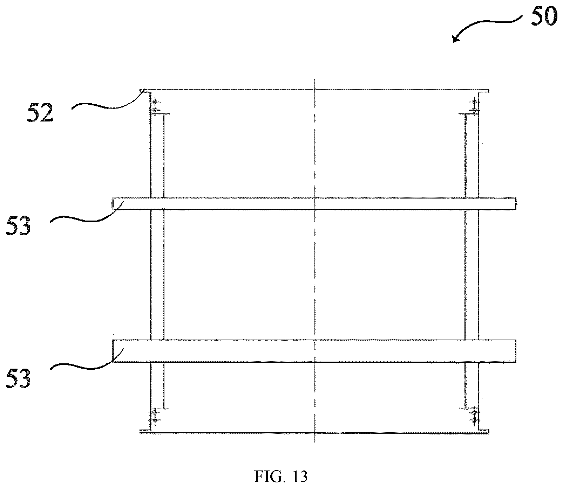

As shown in FIG. 11 and FIG. 13, an outer side of the base 51 is sleeved with at least one annular member 53 for installing a lead plate. In the illustrated embodiment, the detection channel 50 includes two annular components. Installing the lead plate on the outer side of the base 51 may prevent an incidence of the radiation from the region. In the embodiment, the outer side of the base 51 includes a region where the lead plate is not installed, so as to allow an incidence of the detection radiation from the region. In the illustrated embodiment, the region where the lead plate is not installed may be located between the two annular members. Certainly, A position of the region where the lead plate is not installed may also be adjusted by those skilled in the art according to actual needs.

As shown in FIG. 1 to FIG. 2, the CT detection device 100 also includes a channel component 70, and the object to be detected passes through the channel component to complete a detection process. As shown in FIG. 1 to FIG. 2, the channel component 70 includes a detection channel 50 and at least one transmission channel 60. The at least one transmission channel 60 is connected to and communicated with at least one of two ends of the base 51 of the detection channel 50, so that the object to be detected is allowed to be transmitted from the transmission channel to the detection channel, or from the detection channel to the transmission channel. In the illustrated embodiment, the channel assembly 70 includes two transmission channels 60.

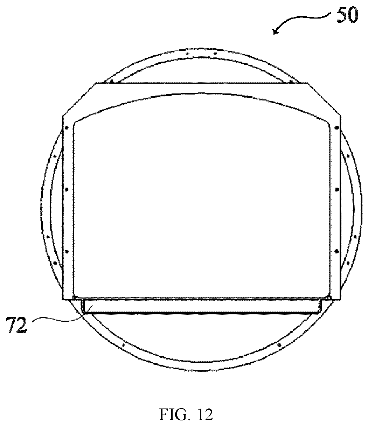

As shown in FIG. 12, the channel assembly 70 also includes a transmission belt channel 72 located at bottom portions of the detection channel 50 and the transmission channel 60. The transmission belt channel 72 is configured for a transmission belt to pass through, so as to allow the object to be detected to pass through the detection channel and the transmission channel.

In a first embodiment shown in FIG. 8, the cross section of the connecting portion 14 is formed as a herringbone shape, thereby reducing the weight of the support stand while providing sufficient strength and stiffness. Reducing the weight may improve the mobility of the support stand and facilitate a process of installing and adjusting the support stand.

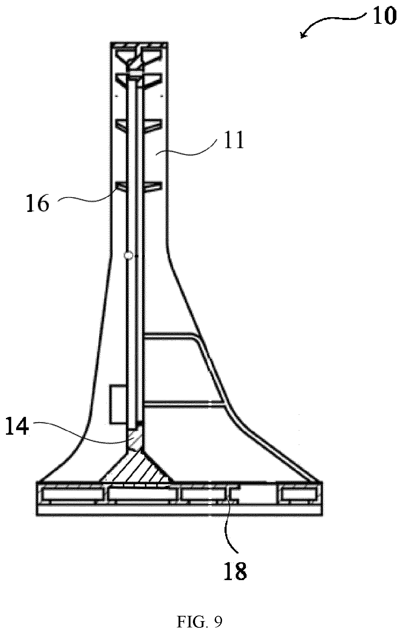

In a second embodiment shown in FIG. 9, the cross section of the connecting portion 14 is formed as an inverted T shape.

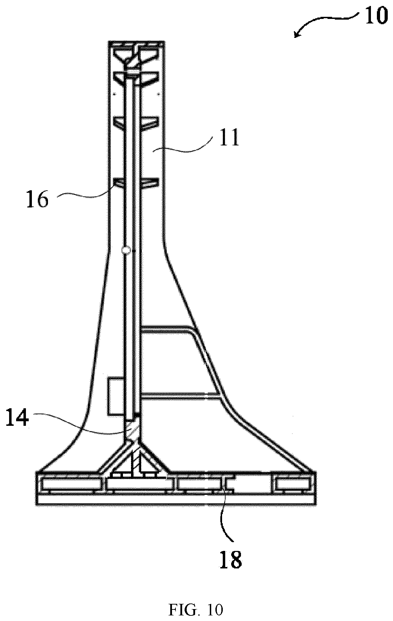

In a third embodiment shown in FIG. 10, the cross section of the connecting portion 14 is formed as an inverted tree branch shape. The connecting portion of the present disclosure is not limited to shapes of the cross section shown, and other shapes of the cross section may be set as needed.

As shown in FIG. 5, the support stand 10 also includes a first support plate 15. The first support plate 15 is arranged on a periphery of the main body portion 11 and extends outward in an axial direction of the main body portion 11. In the embodiment, the first support plate 15 may be disposed above the bearing mounting hole 12 and formed as a semicircle shape. Certainly, although the first support plate 15 has a semicircular shape as shown in FIG. 5, those skilled in the art may design the first support plate 15 into any other suitable shape as needed, such as an ellipse, etc.

As shown in FIG. 5, the support stand 10 also includes a plurality of first reinforcing ribs 16. The first reinforcing rib 16 may enhance the strength and stiffness of the support stand 10. In the embodiment, one side of each first reinforcing rib 16 is connected to a side surface of the first support plate 15, and a second side connected with the one side is connected to the main body portion 11.

In the illustrated embodiment, the plurality of first reinforcing ribs 16 are uniformly arranged in a circumference direction of the first support plate 15. Those skilled in the art may understand that the plurality of first reinforcing ribs are not necessarily uniformly arranged in the circumference direction of the first support plate 15, but may be arranged in other rules, such as arranged at a preset interval. In addition, the plurality of first reinforcing ribs may be formed as cross-shaped mesh ribs.

As shown in FIG. 5, the support stand 10 also includes a plurality of second reinforcing ribs 17. The second reinforcing rib 17 may improve the strength and stiffness of the support stand 10. Each second reinforcing rib 17 extends downward from an outer edge of the bearing mounting hole 12 to the pedestal 13 via the bottom portion of the main body portion 11 and the connecting portion 14. In the illustrated embodiment, the plurality of second reinforcing ribs 17 have a flat shape and are uniformly spaced from each other. The plurality of second reinforcing ribs may be formed as cross-shaped mesh ribs. However, the embodiments of the present disclosure are not limited to this, and those skilled in the art may make appropriate adjustments as needed.

As shown in FIG. 8 to FIG. 10, a plurality of third reinforcing ribs 18 are disposed inside the pedestal 13. The third reinforcing rib 18 may enhance the strength and stiffness of the support stand. In the illustrated embodiment, the third reinforcing rib 18 is formed as a cross shape.

In the embodiment, the support stand 10 may be manufactured by an integral cast forming, so that the main body portion and the pedestal are formed integrally. The method may reduce a traditional connection process between the support stand and the pedestal, thereby reducing a processing workload. The process may use a cast aluminum material, which may further reduce a weight of the support stand. In other embodiments, the process may use a cast iron material or other cast alloy materials.

Alternatively, the main body portion and the pedestal of the support stand may be manufactured as two separate parts, and then the two parts may be connected into one part. Alternatively, the support stand according to the embodiments of the present disclosure may also be made by welding.

As shown in FIG. 1 to FIG. 2, the CT detection device 100 also includes at least one pedestal extension section 40 assembled with the pedestal 13. The pedestal extension section 40 is matched with the pedestal 13 of the support stand 10 so as to jointly support the CT detection device 100.

As shown in FIG. 1 to FIG. 4, the support stand 10 and the detection channel 50 in the embodiments of the present disclosure may be used in conjunction, so that a flexibility of the CT detection device may be improved. When a small object is required to be detected, it is only required to connect at least one of two ends of the support stand in the embodiment to the pedestal extension section, and correspondingly connect at least one of two ends of the detection channel to the transmission channel. In addition, when maintenance is required, the pedestal extension section and the transmission channel may be disconnected from the support stand and the detection channel, respectively, so that the maintenance may be carried out respectively, which may facilitate the use of users.

Those skilled in the art may understand that the above embodiments are all exemplary, and those skilled in the art may make improvements thereto. Structures described in the various embodiments may be freely combined without a structural or principal conflict.

The present disclosure is described with reference to the accompanying drawings, however, the embodiments disclosed in the accompanying drawings are intended to exemplarily illustrate the preferred embodiments of the present disclosure, and should not be construed as limiting the present disclosure.

Some embodiments of the general inventive concept of the present disclosure have been illustrated and described, however, those of ordinary skill in the art will understand that modifications may be made to these embodiments. The scope of the present disclosure is defined by the claims.

It should be noted that the wording "include" does not exclude other elements or steps, and the wording "a" or "an" does not exclude plurality. Additionally, any reference numeral in the claims should not be construed as limiting the scope of the present disclosure.

## Claims

1. A detection channel (50) for a CT detection device (100), comprising:
a base (51) having two open ends, wherein the base (51) is configured to allow an object to be detected to pass through the detection channel (50),
wherein the overall detection channel (50) is integrally made of a carbon fiber composite material without splicing;
wherein the carbon fiber composite material comprises a carbon fiber layer (50A), an aramid honeycomb paper layer (50B) and an aramid layer (50C) stacked in sequence, the carbon fiber layer (50A) is located on an inner side of the detection channel (50), and a thickness of the carbon fiber layer (50A) is 0.1-0.5 mm, a thickness of the aramid honeycomb paper layer (50B) is 1-10 mm, and a thickness of the aramid layer (50C) is 0.1-0.5 mm; and
wherein a thickness of an aramid honeycomb paper layer (50B) in the carbon fiber composite material forming a channel bottom plate of the base (51) is larger than a thickness of an aramid honeycomb paper layer (50B) in the carbon fiber composite material forming other portions of the base (51).

2. The detection channel according to any one of claims 1, wherein a connecting surface (52) is provided on at least one of two ends of the base (51), and the connecting surface (52) is configured to be connected to a transmission channel (60) so as to form a through channel assembly (70).

3. The detection channel according to any one of claims 1, wherein an outer side of the base (51) is sleeved with at least one annular member (53) for mounting a lead plate.

4. The detection channel according to 3, wherein the outer side of the base (51) comprises a region where the lead plate is not installed so as to allow an incidence of a detection radiation from the region.

5. A channel assembly for a CT detection device (100), comprising:
the detection channel (50) according to any one of claims 1-4; and
at least one transmission channel (60) in connection and communication with at least one of two ends of the base (51) of the detection channel (50).

6. The channel assembly according to claim 5, further comprising a transmission belt channel (72) located at bottoms of the detection channel (50) and the transmission channel (60) and configured for a transmission belt to pass through.

7. A CT detection device (100), comprising: the detection channel (50) according to any one of claims 1-4.

8. The CT detection device according to claim 7, further comprising:
a rotating frame (30) provided with a radiation source and a detector;
a slip ring bearing (20), and
a support stand (10), comprising:
a main body portion (11) comprising a bearing mounting hole (12), wherein the slip ring bearing (20) is arranged in the bearing mounting hole (12), and the rotating frame (30) is rotatably disposed on the slip ring bearing (20);
a pedestal (13) located at a bottom portion of the main body portion (11) and configured to support the main body portion (11); and
a connecting portion (14), wherein a width of a lower portion of a cross section of the connecting portion is greater than a width of an upper portion of the cross section of the connecting portion, an upper portion of the connecting portion is connected to the main body portion (11), and a lower portion of the connecting portion is connected to the pedestal (13),
wherein the detection channel (50) is arranged in a mounting space of the rotating frame (30).

## Patentansprüche

1. Ein Detektionskanal (50) für eine CT-Detektionsvorrichtung (100), umfassend:
eine Basis (51) mit zwei offenen Enden, wobei die Basis (51) dazu konfiguriert ist, es einem zu detektierenden Objekt zu ermöglichen, durch den Detektionskanal (50) hindurchzutreten,
wobei der gesamte Detektionskanal (50) integral aus einem Kohlefaserverbundmaterial ohne Spleißen hergestellt ist;
wobei das Kohlefaserverbundmaterial eine Kohlefaserschicht (50A), eine Aramid-Wabenpapierschicht (50B) und eine Aramidschicht (50C) umfasst, die der Reihe nach gestapelt sind, wobei die Kohlefaserschicht (50A) an einer Innenseite des Detektionskanals (50) angeordnet ist, und eine Dicke der Kohlefaserschicht (50A) 0,1-0,5 mm beträgt, eine Dicke der Aramid-Wabenpapierschicht (50B) 1-10 mm beträgt und eine Dicke der Aramidschicht (50C) 0,1-0,5 mm beträgt; und
wobei eine Dicke einer Aramid-Wabenpapierschicht (50B) in dem Kohlefaserverbundmaterial, das eine Kanalbodenplatte der Basis (51) bildet, größer ist als eine Dicke einer Aramid-Wabenpapierschicht (50B) in dem Kohlefaserverbundmaterial, das andere Abschnitte der Basis (51) bildet.

2. Der Detektionskanal nach einem der Ansprüche 1, wobei eine Verbindungsfläche (52) an mindestens einem von zwei Enden der Basis (51) bereitgestellt ist und die Verbindungsfläche (52) dazu konfiguriert ist, mit einem Sendekanal (60) verbunden zu werden, um eine Durchgangskanalanordnung (70) zu bilden.

3. Der Detektionskanal nach einem der Ansprüche 1, wobei eine Außenseite der Basis (51) mit mindestens einem ringförmigen Element (53) zum Montieren einer Bleiplatte ummantelt ist.

4. Der Detektionskanal nach 3, wobei die Außenseite der Basis (51) einen Bereich umfasst, in dem die Bleiplatte nicht installiert ist, um einen Einfall einer Detektionsstrahlung aus dem Bereich zu ermöglichen.

5. Eine Kanalanordnung für eine CT-Detektionsvorrichtung (100), umfassend:
den Detektionskanal (50) nach einem der Ansprüche 1-4; und
mindestens einen Sendekanal (60) in Verbindung und Kommunikation mit mindestens einem von zwei Enden der Basis (51) des Detektionskanals (50).

6. Die Kanalanordnung nach Anspruch 5, ferner umfassend einen Förderbandkanal (72), der an Unterseiten des Detektionskanals (50) und des Sendekanals (60) angeordnet und dazu konfiguriert ist, dass ein Förderband hindurchtritt.

7. Eine CT-Detektionsvorrichtung (100), umfassend: den Detektionskanal (50) nach einem der Ansprüche 1-4.

8. Die CT-Detektionsvorrichtung nach Anspruch 7, ferner umfassend:
einen Drehrahmen (30), der mit einer Strahlungsquelle und einem Detektor bereitgestellt ist;
ein Schleifringlager (20), und
einen Stützständer (10), umfassend:
einen Hauptkörperabschnitt (11), der ein Lagermontageloch (12) umfasst, wobei das Schleifringlager (20) in dem Lagermontageloch (12) angeordnet ist und der Drehrahmen (30) drehbar an dem Schleifringlager (20) angeordnet ist;
einen Sockel (13), der an einem Bodenabschnitt des Hauptkörperabschnitts (11) angeordnet und dazu konfiguriert ist, den Hauptkörperabschnitt (11) zu stützen; und
einen Verbindungsabschnitt (14), wobei eine Breite eines unteren Abschnitts eines Querschnitts des Verbindungsabschnitts größer ist als eine Breite eines oberen Abschnitts des Querschnitts des Verbindungsabschnitts, wobei ein oberer Abschnitt des Verbindungsabschnitts mit dem Hauptkörperabschnitt (11) verbunden ist und ein unterer Abschnitt des Verbindungsabschnitts mit dem Sockel (13) verbunden ist,
wobei der Detektionskanal (50) in einem Montageraum des Drehrahmens (30) angeordnet ist.

## Revendications

1. Un canal de détection (50) pour un dispositif de détection CT (100), comprenant :
une base (51) ayant deux extrémités ouvertes, dans lequel la base (51) est configurée pour permettre à un objet à détecter de passer à travers le canal de détection (50),
dans lequel le canal de détection (50) global est réalisé intégralement en un matériau composite de fibre de carbone sans raccordement ;
dans lequel le matériau composite de fibre de carbone comprend une couche de fibre de carbone (50A), une couche de papier en nid d'abeilles aramide (50B) et une couche d'aramide (50C) empilées en séquence, la couche de fibre de carbone (50A) est située sur un côté intérieur du canal de détection (50), et une épaisseur de la couche de fibre de carbone (50A) est de 0,1-0,5 mm, une épaisseur de la couche de papier en nid d'abeilles aramide (50B) est de 1-10 mm, et une épaisseur de la couche d'aramide (50C) est de 0,1-0,5 mm ; et
dans lequel une épaisseur d'une couche de papier en nid d'abeilles aramide (50B) dans le matériau composite de fibre de carbone formant une plaque de fond de canal de la base (51) est supérieure à une épaisseur d'une couche de papier en nid d'abeilles aramide (50B) dans le matériau composite de fibre de carbone formant d'autres portions de la base (51).

2. Le canal de détection selon l'une quelconque des revendications 1, dans lequel une surface de connexion (52) est prévue sur au moins l'une de deux extrémités de la base (51), et la surface de connexion (52) est configurée pour être connectée à un canal de transmission (60) de manière à former un ensemble de canal traversant (70).

3. Le canal de détection selon l'une quelconque des revendications 1, dans lequel un côté extérieur de la base (51) est manchonné avec au moins un élément annulaire (53) pour monter une plaque de plomb.

4. Le canal de détection selon 3, dans lequel le côté extérieur de la base (51) comprend une région où la plaque de plomb n'est pas installée de manière à permettre une incidence d'un rayonnement de détection depuis la région.

5. Un ensemble de canal pour un dispositif de détection CT (100), comprenant :
le canal de détection (50) selon l'une quelconque des revendications 1-4 ; et
au moins un canal de transmission (60) en connexion et communication avec au moins l'une de deux extrémités de la base (51) du canal de détection (50).

6. L'ensemble de canal selon la revendication 5, comprenant en outre un canal de courroie de transmission (72) situé aux fonds du canal de détection (50) et du canal de transmission (60) et configuré pour qu'une courroie de transmission passe à travers.

7. Un dispositif de détection CT (100), comprenant : le canal de détection (50) selon l'une quelconque des revendications 1-4.

8. Le dispositif de détection CT selon la revendication 7, comprenant en outre :
un cadre rotatif (30) muni d'une source de rayonnement et d'un détecteur ;
un palier à bague collectrice (20), et
un support (10), comprenant :
une portion de corps principal (11) comprenant un trou de montage de palier (12), dans lequel le palier à bague collectrice (20) est agencé dans le trou de montage de palier (12), et le cadre rotatif (30) est disposé de manière rotative sur le palier à bague collectrice (20) ;
un piédestal (13) situé à une portion inférieure de la portion de corps principal (11) et configuré pour supporter la portion de corps principal (11) ; et
une portion de connexion (14), dans lequel une largeur d'une portion inférieure d'une section transversale de la portion de connexion est supérieure à une largeur d'une portion supérieure de la section transversale de la portion de connexion, une portion supérieure de la portion de connexion est connectée à la portion de corps principal (11), et une portion inférieure de la portion de connexion est connectée au piédestal (13),
dans lequel le canal de détection (50) est agencé dans un espace de montage du cadre rotatif (30).
